# EUROPEAN PATENT APPLICATION

(11) **EP 3 029 926 A1**
(43) Date of publication of application: **08.06.2016**
(21) Application number: 14306934.2
(22) Date of filing: 02.12.2014
(51) Int. Cl.: H04N 1/60

(54) **Method and apparatus for interactive color manipulation**

(71) Applicant: Thomson Licensing, 92130 Issy-les-Moulineaux (FR)
(72) Inventor: Arrighetti, Walter, 30625 Hannover (DE)
(74) Representative: Huchet, Anne

(57) **Abstract**

A customized color transformation is generated in response to interactive user manipulation of source and target color gamuts. Data related to a first and to a second color gamut are loaded (11, 12). An initial color transformation is selected (13). Based on this transformation, color transformation values are calculated (14), which are adapted for transforming a subset of values of the first color gamut into a corresponding subset of values of the second one. Visual representations of the first and the second color gamut and the calculated color transformation values are displayed (15) in at least one display box of a user interface of a tool adapted for interactive color manipulation. The color transformation values are recalculated (16) and the displayed visual representations are updated (17) in response to a user manipulation applied to at least one of the visual representations of the first and of the second color gamut.

## Description

### FIELD

A method and an apparatus for color correction are presented. In particular, the present disclosure relates to a computer implemented method and a data processing apparatus for interactive manipulation of colors of images and video, and to a corresponding computer readable storage medium.

### BACKGROUND

Methods and best practices for describing color transformations exist, which relate to either the overall look (primary color correction) or particular scene elements (secondary color correction). Most of the methods rely on either a purely mathematical representation (e.g. color-space transformation formulas, gamut mapping algorithms, color appearance models, etc.) of digital color, or on visual comparison with the pictorial data (directly applying the color transformation to the actual images and/or to reference images). These methods can be implemented in color correction suites and color management applications, for example for colorimetric analysis, e.g. in the color calibration and characterization of devices.

However, intuitive customization of mathematical representations of color transformations is difficult and tools only relying on pictorial elements like reference images enable color tuning by an indirect and, therefore, sometimes imprecise approach.

In "Color-Space CAD" [I] and "Color-space CAD: direct Gamut Editing in 3D" [II] an interactive image-processing framework is described, where a source gamut is derived from a selected area of a reference image, users can manipulate colors of the source gamut directly in a 3D perceptual color editor, and the result can be transferred to a selected area of the same or another image.

There remains a need for an additional fine-tuning tool or apparatus and a method that can be provided to colorists and image specialists, that allow to precisely create color transformations and color-transformation systems, which enable a more precise color-based tuning and creative-intent shaping of color transformations between color gamuts.

### SUMMARY OF THE INVENTION

A computer implemented method and a data processing apparatus for interactive color manipulation, as well as a corresponding computer readable storage medium, according to the appended claims are presented. The solution may, for example, be implemented by means of a plug-in to a 3D modeling software framework, in particular a Computer Graphics (CG) software framework providing tools for sculpting three-dimensional models, for example by CG modeling methods such as bump mapping, UV-mapping, rigging etc. The color manipulation may be applied in image and video editing and post-processing tools.

According to an embodiment, a computer implemented method for interactive color manipulation comprises
- loading data related to a first color gamut;
- loading data related to a second color gamut;
- selecting an initial color transformation;
- calculating, based on the initial color transformation, color transformation values, which are adapted for transforming at least a subset of values of the first color gamut into a corresponding subset of values of the second color gamut;
- displaying visual representations of the first color gamut, the second color gamut and the calculated color transformation values in at least one display box of a user interface of a tool adapted for interactive color manipulation; and
- recalculating the color transformation values and updating the displayed visual representations in response to a user manipulation applied to at least one of the visual representations of the first and of the second color gamut.

Accordingly, a data processing apparatus for interactive color manipulation comprises
- a configuration unit configured to load data related to a first color gamut, select an initial color transformation and load data related to a second color gamut;
- a transformation calculation unit configured to calculate, based on the initial color transformation, color transformation values, which are adapted for transforming at least a subset of values of the first color gamut into a corresponding subset of values of the second color gamut; and
- a display unit configured to display visual representations of the first color gamut, the second color gamut and the calculated color transformation values in at least one display box of a user interface of the apparatus; wherein the transformation calculation unit is configured to recalculate the color transformation values and the display unit is configured to update the displayed visual representations in response to a user manipulation applied to at least one of the visual representations of the first and of the second color gamut.

The configuration unit is configured to load the data related to the first color gamut, to select the initial color transformation and to load the data related to the second color gamut in response to a user input. In another embodiment the configuration unit is configured to perform at least one of these tasks automatically, based on predefined settings.

Units comprised in the apparatus, such as the configuration unit, the transformation calculation unit and the display unit may, for example, be provided as separate devices, jointly as at least one device or logic circuitry, or functionality carried out by a microprocessor, microcontroller or other processing device, computer or other programmable apparatus.

According to an embodiment, a data processing apparatus for interactive color manipulation comprises
- a display device;
- a processing device; and
- a memory device storing instructions that, when executed, cause the apparatus to
- load data related to a first color gamut;
- load data related to a second color gamut;
- select an initial color transformation;
- calculate, based on the initial color transformation, color transformation values, which are adapted for transforming at least a subset of values of the first color gamut into a corresponding subset of values of the second color gamut;
- display, using the display device, visual representations of the first color gamut, the second color gamut and the calculated color transformation values in at least one display box of a user interface of a tool adapted for interactive color manipulation; and
- recalculate the color transformation values and update the displayed visual representations in response to a user manipulation applied to at least one of the visual representations of the first and of the second color gamut.

Further, a computer readable storage medium has stored therein instructions enabling interactive color manipulation, which, when executed by a computer, cause the computer to:
- load data related to a first color gamut;
- load data related to a second color gamut;
- select an initial color transformation;
- calculate, based on of the initial color transformation, color transformation values, which are adapted for transforming at least a subset of values of the first color gamut into a corresponding subset of values of the second color gamut;
- display visual representations of the first color gamut, the second color gamut and the calculated color transformation values in at least one display box of a user interface of a tool adapted for interactive color manipulation; and
- recalculated the color transformation values and updating the displayed visual representations in response to a user manipulation applied to at least one of the visual representations of the first and of the second color gamut.

The computer readable storage medium tangibly embodies a program of instructions, which, when executed by a computer, cause the computer to perform the described method steps.

The data related to the first color gamut and the data related to the second color gamut are loaded into a memory for further processing.

Any color transformation, be it either of technical or creative intents, can be mathematically described as a (vector) mapping whose source domain and target domain are two color spaces, which may coincide in some cases, e.g. they might both be RGB. For the method, the initial color transformation to start from can be selected from one or more of the following:
- a default color transformation, such as a color-space conversion, e.g. from color-space DCI P3 defined by the Digital Cinema Initiatives to RGB color-space as defined in ITU-R Recommendation BT.709 or from color -space according to ITU-R Recommendation BT.2020 to DCI X'Y'Z', or a preset creative "look" (for example a bleach bypass or a sepia look);
- an input Color LUT (lookup table) from a specific range of LUT file formats; and
- a specific CDL (Color Decision List) or other color-correction parameters from another format.

Further, a GUI linked to a specific source image or video frame can be started, where the user selects to apply either a primary or a secondary color correction. The primary color correction is applied to the overall picture. The secondary color correction acts only on either a matte, a key or a power window over the frame. In either of these three cases, a 1-channel transparency/selection mask is extrapolated from the image frame and the secondary color correction is applied, pixel-by-pixel, multiplied by the transparency mask.

A display box is, for example, a frame or window displayed on a display device or screen, for displaying, the visual representations of the first and the second color gamut and providing means for user interaction with the displayed, e.g. two-dimensional or three-dimensional, visual representations. The user may interact with a visual representation using a pointer device, such as a mouse, a pen or a finger.

The visual representation of the first color gamut comprises at least the subset of values, which are transformed into the corresponding subset of values of the second color gamut based on the calculated color transformation values. The visual representation of the second color gamut at least comprises the subset of corresponding values of the second color gamut.

The present solution allows customizing color spaces or gamuts, and, thereby, describing the color transformation among them, e.g. using tools and methods derived from Computer Graphics, and in particular the 3D modeling discipline.

The proposed solution allows provision of a method and an additional color data fine-tuning tool to colorists and image specialists involved in creating color transformations and color-transformation systems for image and video color manipulation, which enables a more precise color-based tuning by manipulating visual representations of abstract colors, which facilitates the creation of a color transformation using a visual representation of the color spaces or gamuts themselves rather than relying on pictorial elements, such as reference images. The solution allows producing, as an output, a customized color transformation, such as a specific kind of color LUT (e.g. a 3D LUT), a standard color-space conversion (among known gamuts) or, particularly, a creative-intent color transformation. The generated color transformation is applied to an image or video, either in a next stage or continuously during the color manipulation.

The proposed solution at least has the effect of intuitively enabling precise color-based tuning. Even if color scientists and colorists are used to working with pictorial references, and color-matching algorithms exist to automate this process, evaluating a color transformation by visualizing it as geometrical embedding within the source and target color gamut is useful, e.g. for applying specific manipulations within a precise range of colors, or drifting an existing color transformation to be applied on similar but not identical color ranges. The provided geometrical method helps to visually apply a visually-referenced color transformation with high numerical precision due to a number-to-geometry correspondence.

In one embodiment the visual representation of a selected one of the first and the second color gamut is updated in response to a user manipulation applied to the visual representation of the color transformation values. In other words, in addition to the visual representations of the first and the second color gamut being customizable by user manipulation, the visual representation of the color transformation itself can be subject to interactive user manipulation, resulting in an update of the first or the second color gamut, which may be, for example, source and target or input and output color gamut. This allows even more for creative sculpting and intuitive shaping of the color transformation.

In one embodiment the data related to the first color gamut is at least one of a first color space information, data defining a first device-specific gamut, data defining a first color gamut defined by a first reference color look-up table, and a first color range information. The term "data related to a first color gamut" can refer to data defining the first color gamut itself or data defining a color space and allowing determination of a suitable color gamut. The first color space information may, for example, relate to a source color space, and the source gamut may be determined from a source color space (with gamut known in advance). The data defining the first device-specific gamut can be provided, for example, from a preset, an ICC profile or previous manual calibration. The data defining a first color gamut defined by a first reference color look-up table can be related, for example, to a specific gamut taken from a trim-LUT or a specifically-tailored reference color LUT, e.g. from scanning a film strip. The first color range information is, for example, an input color range coming from a secondary color correction based on a color-key.

In one embodiment the data related to the second gamut is at least one of a second color space information, data defining a second device-specific gamut, data defining a second gamut defined by a second reference color look-up table, and a second color range information. The term "data related to a second color gamut" can refer to data defining the second color gamut itself or data defining, for example, a color space and allows deriving a suitable color gamut. The second color space information may, for example, relate to a target color space. The data defining the second device-specific gamut can be provided, for example, from a preset, an ICC profile or previous manual calibration. The data defining a second color gamut defined by a second reference color look-up table can be related, for example, to a specific gamut taken from a color LUT, e.g. from a film print emulation or a creative LUT. The second color range information is, for example, an output color range coming from a secondary color correction based on a color-key.

In one embodiment the visual representation of the calculated color transformation values comprises at least one of a vectorscope representation, a histogram representation and a color channel parade representation, for example an RGB parade. Depending on the embodiment, the visual representation of the color transformation may not only be updated automatically in response to user manipulation of at least one of the first and the second color gamut but also by direct user manipulation.

Usually, the first color gamut is a source color gamut and the second color gamut is a target color gamut. The source color gamut may belong to an image or video sequence, e.g. a scene from a movie to be color manipulated, or to a reference image or video, wherein the target color gamut may belong to the same or a different image, video or scene. However, in another embodiment the first color gamut can be a target color gamut and the second color gamut can be a source color gamut. In other words, for example a manipulation of the representation of the color transformation can result in an update of the source color gamut instead of the target color gamut. This may be selectable, for example using a corresponding GUI input menu.

In one embodiment the first color gamut is visually represented as a first object in a first space having a number of dimensions identical to a number of channels of a first color space and the second color gamut is visually represented as a second object in a second space having a number of dimensions identical to a number of channels of a second color space. For example, the source and target gamuts of the color transformation are represented as two objects or manifolds in spaces, whose dimensions correspond to the number of channels of the corresponding color spaces. As an example, in case source and target spaces are both three-dimensional, for example spaces from either RGB, CMY, CIE XYZ, L*a*b*, Lu'v' models, etc., the two manifolds are 3D domains. Any 2- and 3-dimensional color space may be used, potentially also higher-dimensional spaces. In case of higher-dimensional spaces, such as hexachrome spaces of some printers, or color spaces of YRGB monitors, suitable sections can be generated as well.

In an example embodiment the color transformation values are recalculated and the displayed representations are updated in response to a user manipulation of a corresponding boundary of at least one of the first object and the second object. Here, the displayed representations usually refer to all of the displayed representations, not only to the representation being subject to the user manipulation.

The general idea is to use a visual methodology, which is applicable in particular to 3D Computer Graphics (CG) software frameworks, for describing and customizing a color-correction operation for video grading. The method may comprise using tools from Computer Graphics (in particular 3D modeling) to visualize the source and target gamut embedded in appropriate 3D color spaces of any creative- or technical-intent color transformation. 3D modeling tools and techniques, such as for example rigging, UV-mapping and bump-mapping, can be used to manipulate the boundary of the source and target gamut. For 3D representations, the object boundary corresponds to the surface of the object. The application of Computer Graphics modeling tools, such as, for example, applying UV mapping, i.e. projecting a texture map onto the surface of the object, enables highly creative changes to the colorization of target images. As another example, applying rigging to the object allows for animating the object and creating color changes over time, e.g. in a video.

In addition to, for example, manipulation by moving, rotating and affine-transforming the gamuts within their embedding spaces, i.e. their reference color spaces, for proper technical adjustments, in an embodiment any method available through 3D Computer Graphics sculpting tools usually known to be applied to 3D models of "physical" objects editable by Computer Graphics sculpting are applied. In an example embodiment the color transformation values are recalculated and the displayed representations are updated in response to applying at least one of z-brushing, rigging, bump mapping, UV mapping and sculpting to at least one of the first and the second object. In a further example embodiment the color transformation values are recalculated and the displayed representations are updated in response to a user manipulation of a corresponding interior part of at least one of the first object and the second object. This allows for finer control in regions where maximum precision is to be achieved. For 3D, the interior part of an object corresponds to the part of the object below its surface, i.e. inside its boundary. Manipulating the interior parts of the 3D objects can be used to change their 'density', which translates in having refined color transformations.

While not explicitly described, the present embodiments may be employed in any combination or sub-combination.

### BRIEF DESCRIPTION OF THE DRAWINGS

- Fig. 1: schematically illustrates an embodiment of a method for interactive color manipulation;
- Fig. 2: schematically illustrates an embodiment of an apparatus for interactive color manipulation;
- Fig. 3: schematically illustrates another embodiment of an apparatus for interactive color manipulation;
- Fig. 4: illustrates an example of a user interface of a tool adapted to perform a method for interactive color manipulation; and
- Fig. 5: schematically illustrates an example of a visual representation of a color gamut.

### DETAILED DESCRIPTION OF EMBODIMENTS

For a better understanding, the proposed solution will now be explained in more detail in the following description with reference to the figures. It is understood that the solution is not limited to these exemplary embodiments and that specified features can also expediently be combined and/or modified without departing from the scope of the present invention as defined in the appended claims.

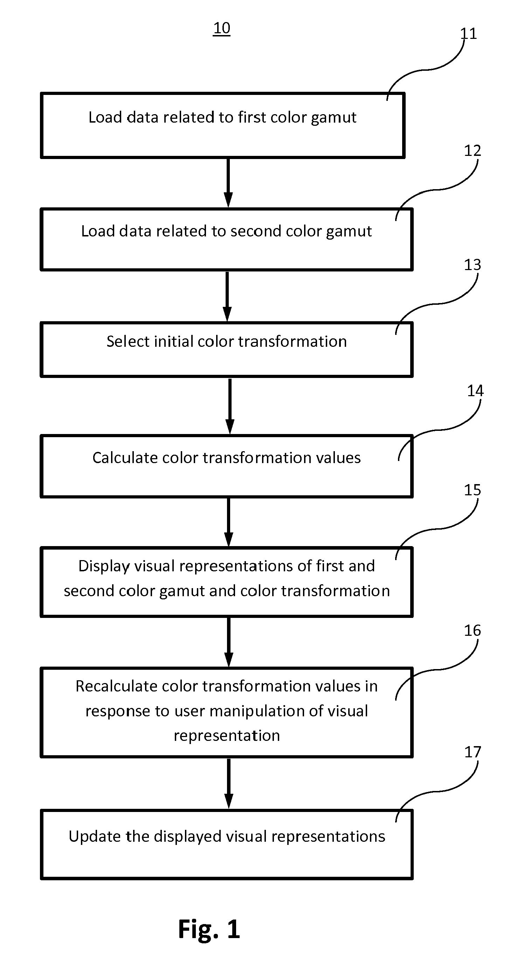

Referring to Fig. 1, an embodiment of a computer implemented method 10 for interactive color manipulation is schematically illustrated. The method allows generating a customized color transformation in response to interactive user manipulation of the first and the second color gamuts, which may be source and target color gamuts, respectively.

During a configuration phase, at least a first step 11, a second step 12 and a third step 13 are performed, either consecutively or in parallel. In the first step 11 data related to a first color gamut are loaded. In the second step 12 data related to a second color gamut are loaded. In the third step 13 an initial color transformation is selected. The data related to the gamuts either correspond to the information required to directly generate the respective color gamuts, or corresponds to information necessary for calculating a gamut. For example, the data related to the second color gamut can refer to a target color space, and a suitable target color gamut is calculated by evaluating the data related to the first or source color gamut and transforming the source color gamut into a target color gamut using the selected initial color transformation.

In a fourth step 14 color transformation values are calculated, based on the initial color transformation, which are adapted for transforming at least a subset of values of the first color gamut into a corresponding subset of values of the second color gamut. If, for example, the data related to the second color gamut merely defines a target color space and the second color gamut is to be calculated as the target color gamut from the loaded data related to the first color gamut and the initial color transformation, the calculated color transformation values directly correspond to values of the initial color transformation. As another example, if the data related to the second color gamut defines the second color gamut and the data related to the first color gamut defines the first color gamut, suitable color transformation values are derived, starting from the initial color transformation, but adapting, if necessary, the color transformation values to enable proper color transformation from the first to the second color gamut.

In a fifth step 15 visual representations of the first color gamut, the second color gamut and the calculated color transformation values are displayed in at least one display box of a user interface of a tool adapted for interactive color manipulation.

In a sixth step 16 the color transformation values are recalculated in response to a user manipulation applied to at least one of the visual representations of the first and of the second color gamut and in a seventh step 17 the displayed visual representations are updated in response to the user manipulation, taking into account the recalculated color transformation values.

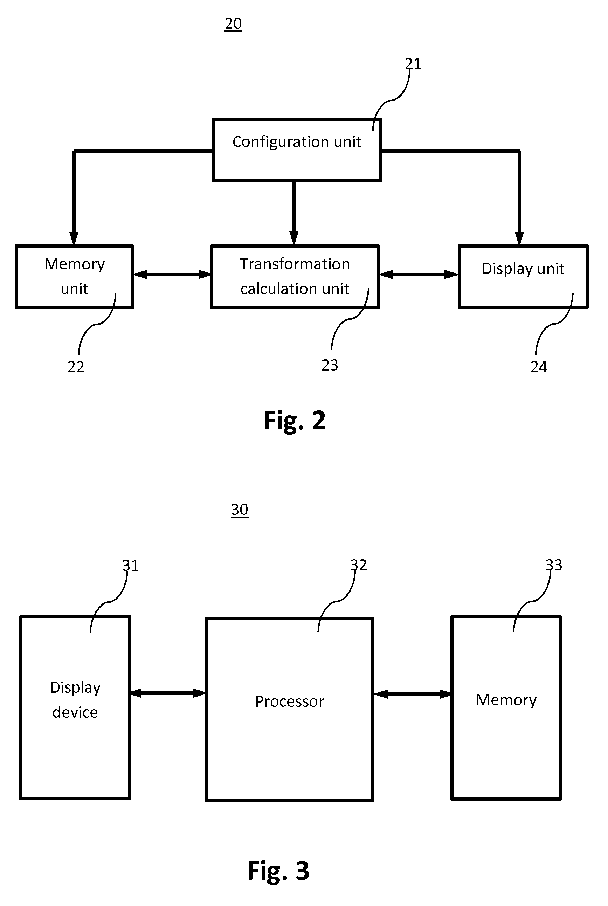

Referring now to Fig. 2 and Fig. 3, embodiments of data processing apparatuses for interactive color manipulation are schematically shown. The apparatus shown in Fig. 2 and the apparatus shown in Fig. 3 allow implementing the advantages and characteristics of the described computer implemented method for interactive color manipulation as part of an apparatus for interactive color manipulation.

The data processing apparatus 20 for interactive color manipulation shown in Fig. 2 comprises a configuration unit 21 configured to load data related to a first color gamut, select an initial color transformation and load data related to a second color gamut. In the shown embodiment the data are loaded into a memory unit 22 where they can be accessed for further processing.

The data processing apparatus 20 further comprises a transformation calculation unit 23 configured to calculate, based on the initial color transformation, color transformation values, which are adapted for transforming at least a subset of values of the first color gamut into a corresponding subset of values of the second color gamut.

Furthermore, the data processing apparatus 20 comprises a display unit 24 configured to display visual representations of the first color gamut, the second color gamut and the calculated color transformation values in at least one display box of a user interface of the apparatus.

The transformation calculation unit 23 is configured to recalculate the color transformation values and the display unit 24 is configured to update the displayed visual representations in response to a user manipulation applied to at least one of the visual representations of the first and of the second color gamut.

The memory unit 22 is arranged to at least temporarily store the data related to the first and the second color gamut, an information identifying the selected initial color transformation, as well as other values calculated during the subsequent processing. In another embodiment, the data processing apparatus 20 does not contain the memory unit 22 but is connected or connectable to the memory by means of an interface. In the shown embodiment the memory 22 is connected to the configuration unit 21 and the transformation calculation unit 23. In other embodiments the units are indirectly connected to the memory unit 22.

In the embodiment shown in Fig. 2 the configuration unit 21, the transformation calculation unit 23 and the display unit 24 directly communicate with each other. In another embodiment the apparatus comprises a controller unit connected at least to one or more of the configuration unit 21, the transformation calculation unit 23 and the display unit 24 and controls their communication.

The configuration unit 21 and the transformation calculation unit 23 may, for example, be provided as separate devices, jointly as at least one device or logic circuitry, or functionality carried out by a microprocessor, microcontroller or other processing device, computer or other programmable apparatus. The data processing apparatus 20 may be or comprise programmable logic circuitry or a processing device arranged to perform the processing.

As shown in Fig. 3, an embodiment of a data processing apparatus 30 for interactive color manipulation comprises a display device 31, a processing device 32 and a memory device 33 storing instructions that, when executed, cause the data processing apparatus to
- load data related to a first color gamut;
- select an initial color transformation;
- load data related to a second color gamut;
- calculate color transformation values of the initial color transformation, which are adapted for transforming at least a subset of values of the first color gamut into a corresponding subset of values of the second color gamut;
- display, using the display device 31, visual representations of the first color gamut, the second color gamut and the calculated color transformation values in at least one display box of a user interface of a tool adapted for interactive color manipulation; and
- recalculate the color transformation values and update the displayed visual representations in response to a user manipulation applied to at least one of the visual representations of the first and of the second color gamut.

For example, the data processing processing device can be a processor adapted to perform the steps according to one of the described methods. In an embodiment said adaptation comprises that the processor is configured, for example programmed, to perform steps according to one of the described methods.

In an embodiment, the data processing apparatus 20 or 30 is a tool or device being part of another apparatus or system, such as, for example, a 3D computer graphics suite or image/video processing framework.

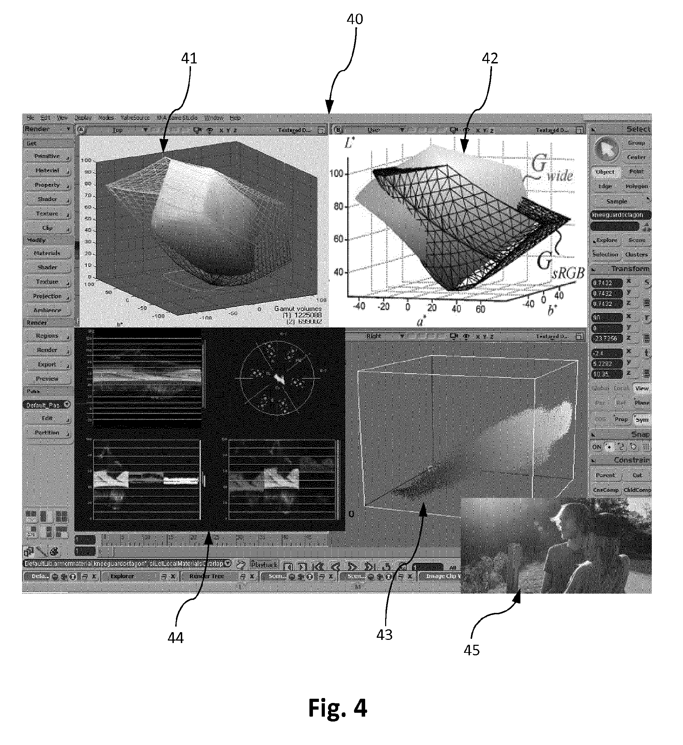

Referring now to Fig. 4, an embodiment of a user interface 40 of a tool adapted to perform a method for interactive color manipulation is shown. The method may be implemented in a software provided as a plug-in to a Computer Graphics modeling software tool providing means for displaying and interactively sculpting 3D models of color gamuts and transformations. The method involves loading a source gamut and an initial color transformation and determining a target gamut, displaying visual representations of the source gamut 41, the target gamut 42 and the applied color transformation 43, 44 and using tools from Computer Graphics, in particular 3D modeling, to allow a user to manipulate the source gamut and target gamut and the transformation, wherein the representations 41, 42, 43, 44 are adapted to changes applied to any of the representations. Not only the boundaries of the representations of the gamuts 41, 42 may be manipulated but also the interior parts and any method available through 3D tools usually known to be applied to 3D models of "physical" objects for professional Computer Graphics sculpting may be applied. In particular, in an embodiment bump mapping, Z-brushing, rigging, sculpting and UV mapping, as well as other CG modeling methods can be applied to the editable 3D models visualizing the gamuts and the transformation, while immediate feedback concerning the applied color changes is provided to the user/operator directly from a sample image 45 being a reference image updated to exhibit the color changes generated by the sculpting. The 3D modeling software may, for example, have a Python-based API for connecting with the plug-in. The plugin can read an input transformation and/or save an output color transformation.

Once the data related to the source color gamut and the target color gamut are chosen, the plugin causes a display device and processor to compute and show at least some visual representations 41, 42, 43 as 3D models, i.e. 3D objects, which can then be subject to sculpting, for example to z-brushing or UV mapping. It should be noted that some of them may not be explicitly or mathematically computable due to absence of a complete invertibility constraint. Here, the shown visual representations are initially
- a texture-free 3D model of the source gamut boundary 41,
- a texture-free 3D model of the target gamut boundary 42,
- a bump-map 43 to be applied to either the source gamut boundary that maps it to the target gamut boundary in case of convex color transformation or, respectively, in case of convex color transformation, the inverse map of the above, i.e. a bump-map to be applied to the target gamut boundary that maps it back to the source color gamut, and
- a colorimetric evaluation "scope" monitor 44, which in the shown embodiment contains a vector map ('LUT-shaper') representing arrows joining specific sampled points within the source 3D color domain being mapped into the target 3D color co-domain, i.e. a visual representation of the corresponding color LUT (44, top right), a source color channel parade (44, bottom left) and target color channel parade, here, RGB parade (44, bottom right), and a histogram representation (44, top left).

The user can then use the host Computer Graphics 3D modeling software tool to manipulate the models and UV-maps, with the usual creative tools available to CG artists (rigging, sculpting, Z-brushing, etc.). The models are treated as "physical" 3D objects or 3D models, but relate to color spaces and/or color transformations.

Additionally, the plugin takes care of keeping and showing the one or more two-dimensional reference images 45 and drawings, which can be updated in real-time while any of the representations, in particular of the 3D models, is changed. The reference image 45 can be one or more of the following:
- A reference image frame from a still picture or from a video playout showing the unmodified color range. A pre-existing viewing LUT can be independently applied to the reference in case the reference's color space/gamut does not match with the source/target color spaces.
- A reference image (be it either the same as above, or another one), showing the color range as modified by the 3D-modeled color transformation. A viewing LUT can be independently applied to the image as well.

The operator/user can manipulate the source color gamut 41, e.g. alter the range of the source colors affected by the color transformation, for example narrowing or broadening the selection and receiving feedback from the reference image or monitor scopes. The user can also manipulate the target color gamut 42, e.g. alter the range of the target colors the image is transformed into.

As another example, painting or brushing on the bump map of the gamuts allows for fine control of the color boundaries, etc. Further, affine controls allow panning, resizing, rotating and/or skewing of the representations, which corresponds to applying color biases, hue shifts (rotations along the edges), saturation adjustments (skewing along the main diagonal), etc.

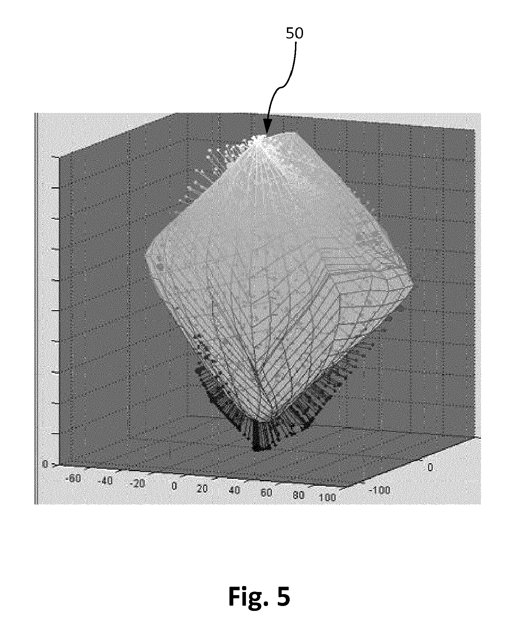

Additionally referring to Fig. 5, an example of a visual representation of a color gamut 50, e.g. a source color gamut or a target color gamut, is schematically shown where the user can also manipulate the interior of the domain, e.g. by manipulating the wireframe structure inside the particular color gamut. This allows for finer control of the shaper LUT in the regions where maximum precision is to be achieved.

Still referring to Fig. 4 and Fig. 5, another example of color manipulation according to the described method is a secondary color grading of specific elements when they do not retain consistent original colors. The same object to be color-corrected, e.g. a particular actor's skin-tone or iris color, needs to be adjusted to match a certain reference, for example a lizard-man with a peculiar yellow-light on the iris and slimey-greeny skin. In several shots, due to, for example, different lighting, different cameras capturing the scene, e.g. different sensors' colorimetries, or due to inconsistent photography, the actor's skin and iris do not have identical colors across several scenes on the original footage plates.

With the provided method, the same iris and skin color effect can be reached, i.e. the target gamut/domain is the same, but the source gamut/domain needs to slightly vary its geometry from scene to scene. Once the user, being a colorist, has color-matched the skin tones and iris color on the first scene, even with traditional controls and techniques, the same color effect can be easily achieved by fine-adjusting the source domain of the color transform for each new scene via the described solution.

As will be appreciated by one skilled in the art, aspects of the present principles can be embodied as an apparatus, a system, method or computer readable medium. Accordingly, aspects of the present principles can take the form of a hardware embodiment, a software embodiment or an embodiment combining software and hardware aspects. Furthermore, aspects of the present principles can take the form of a computer readable storage medium. Any combination of one or more computer readable storage medium(s) may be utilized.

Aspects of the present principles may, for example, at least partly be implemented in a computer program comprising code portions for performing steps of the method according to an embodiment of the invention when run on a programmable apparatus or enabling a programmable apparatus to perform functions of an apparatus or system according to an embodiment of the invention.

Further, any shown connection may be a direct or an indirect connection. Furthermore, those skilled in the art will recognize that the boundaries between logic blocks are merely illustrative and that alternative embodiments may merge logic blocks or impose an alternate decomposition of functionality upon various logic blocks.

### CITATION LIST

[I] N. Neophytou & K. Mueller, "Color-Space CAD", Proceedings ACM SIGGRAPH 2006, Article No. 122.
[II] N. Neophytou & K. Mueller, "Color-Space CAD: Direct Gamut Editing in 3D", IEEE Computer Graphics and Applications 05/06 2008: pages 88-98.

## Claims

1. Computer implemented method (10) for interactive color manipulation, **comprising**
- loading (11) data related to a first color gamut;
- loading (12) data related to a second color gamut;
- selecting (13) an initial color transformation;
- calculating (14), based on the initial color transformation, color transformation values, which are adapted for transforming at least a subset of values of the first color gamut into a corresponding subset of values of the second color gamut;
- displaying (15) visual representations of the first color gamut, the second color gamut and the calculated color transformation values in at least one display box of a user interface of a tool adapted for interactive color manipulation; and
- recalculating (16) the color transformation values and updating (17) the displayed visual representations in response to a user manipulation applied to at least one of the visual representations of the first and of the second color gamut.

2. Computer implemented method according to claim 1, **wherein** the visual representation of a selected one of the first and the second color gamut is updated in response to a user manipulation applied to the visual representation of the color transformation values.

3. Computer implemented method according to claim 1 or claim 2, **wherein** the data related to the first color gamut is at least one of a first color space information, data defining a first device-specific gamut, data defining a first gamut defined by a first reference color look-up table, and a first color range information.

4. Computer implemented method according to one of the preceding claims, **wherein** the data related to the second color gamut is at least one of a second color space information, data defining a second device-specific gamut, data defining a second gamut defined by a second reference color look-up table, and a second color range information.

5. Computer implemented method according to one of the preceding claims, **wherein** the visual representation of the calculated color transformation values comprises at least one of a vectorscope representation, a histogram representation and a color channel parade representation.

6. Computer implemented method according to one of the preceding claims, **wherein** the first color gamut is a target color gamut and the second color gamut is a source color gamut.

7. Computer implemented method according to one of the preceding claims, **wherein** the first color gamut is visually represented as a first object in a first space having a number of dimensions identical to a number of channels of a first color space and the second color gamut is visually represented as a second object in a second space having a number of dimensions identical to a number of channels of a second color space.

8. Computer implemented method according to claim 7, **wherein** the color transformation values are recalculated (16) and the displayed representations are updated (17) in response to a user manipulation of a corresponding boundary of at least one of the first object and the second object.

9. Computer implemented method according to claim 7 or claim 8, **wherein** the color transformation values are recalculated (16) and the displayed representations are updated (17) in response to a user manipulation of a corresponding interior part of at least one of the first object and the second object.

10. Computer implemented method according to one of claims 7 to 9, **wherein** the color transformation values are recalculated (16) and the displayed representations are updated (17) in response to applying at least one of z-brushing, bump mapping, rigging, UV mapping and sculpting to at least one of the first and the second object.

11. Data processing apparatus (20) for interactive color manipulation, **comprising**
- a configuration unit (21) configured to load data related to a first color gamut, select an initial color transformation and load data related to a second color gamut;
- a transformation calculation unit (23) configured to calculate, based on the initial color transformation, color transformation values, which are adapted for transforming at least a subset of values of the first color gamut into a corresponding subset of values of the second color gamut; and
- a display unit (24) configured to display visual representations of the first color gamut, the second color gamut and the calculated color transformation values in at least one display box of a user interface of the apparatus; wherein
the transformation calculation unit (23) is configured to recalculate the color transformation values and the display unit (24) is configured to update the displayed visual representations in response to a user manipulation applied to at least one of the visual representations of the first and of the second color gamut.

12. Data processing apparatus according to claim 11, **wherein** display unit (24) is configured to update the visual representation of a selected one of the first and the second color gamut in response to a user manipulation applied to the visual representation of the color transformation values.

13. Data processing apparatus according to claim 11 or claim 12, **wherein** the display unit (24) is configured to visually represent the first color gamut as a first object in a first space having a number of dimensions identical to a number of channels of a first color space and the second color gamut as a second object in a second space having a number of dimensions identical to a number of channels of a second color space.

14. Data processing apparatus (30) for interactive color manipulation, **comprising**
- a display device (31);
- a processing device (32); and
- a memory device (33) storing instructions that, when executed, cause the data processing apparatus to
- load data related to a first color gamut;
- select an initial color transformation;
- load data related to a second color gamut;
- calculate color transformation values of the initial color transformation, which are adapted for transforming at least a subset of values of the first color gamut into a corresponding subset of values of the second color gamut;
- display, using the display device (31), visual representations of the first color gamut, the second color gamut and the calculated color transformation values in at least one display box of a user interface of a tool adapted for interactive color manipulation; and
- recalculate the color transformation values and update the displayed visual representations in response to a user manipulation applied to at least one of the visual representations of the first and of the second color gamut.

15. Computer readable storage medium having stored therein instructions enabling interactive color manipulation, which, when executed by a computer, cause the computer to:
- load (11) data related to a first color gamut;
- load (12) data related to a second color gamut;
- select (13) an initial color transformation;
- calculate (14), based on the initial color transformation, color transformation values, which are adapted for transforming at least a subset of values of the first color gamut into a corresponding subset of values of the second color gamut;
- display (15) visual representations of the first color gamut, the second color gamut and the calculated color transformation values in at least one display box of a user interface of a tool adapted for interactive color manipulation; and
- recalculate (16) the color transformation values and update (17) the displayed visual representations in response to a user manipulation applied to at least one of the visual representations of the first and of the second color gamut.
